# EUROPÄISCHE PATENTANMELDUNG

(11) **EP 0 534 356 A1**
(43) Veröffentlichungstag der Anmeldung: **31.03.1993**
(21) Anmeldenummer: 92116159.2
(22) Anmeldetag: 22.09.1992
(51) Int. Cl.: C07F 9/00, C10M 135/18

(54) **Neue Vanadium(IV)-oxid-bis (dialkyldithiocarbamate) und Verfahren zu ihrer Herstellung**

(30) Priorität: 25.09.1991 DE 4131920
(71) Anmelder: Dr. Spiess Chemische Fabrik GmbH & Co., D-67271 Kleinkarlbach (DE)
(72) Erfinder: Spiess, Wolfram, Dr., W-6718 Grünstadt (DE); Franke, Friedrich, Dr., W-6718 Grünstadt (DE); Himmelreich, Rolf, Verstorben (DE)
(74) Vertreter: Eggert, Hans-Gunther, Dr.

(57) **Zusammenfassung**

Vanadium(IV)-oxid-bis(dialkyldithiocarbamate) der allgemeinen Formel 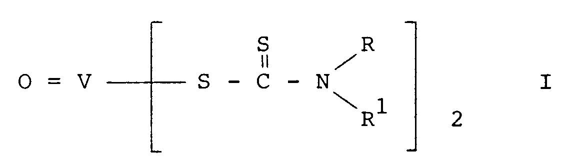
in der R und R¹ gleiche oder verschiedene, verzweigte oder unverzweigte, gesättigte oder ungesättigte Alkylreste mit 1 - 18 Kohlenstoffatomen oder Cycloalkylreste mit 4 - 7 Kohlenstoffatomen bedeuten und ein Verfahren zu ihrer Herstellung, bei dem man 2 Mol eines Alkalidialkyl-dithiocarbamates der allgemeinen Formel 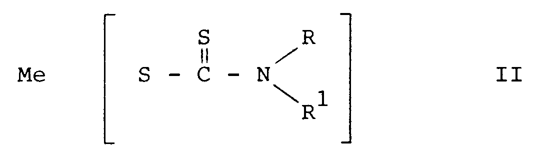
in der R und R¹ die Bedeutung des Anspruchs 1 haben und Me für Natrium, Kalium oder Ammonium steht, mit einem Mol Vanadium(IV)-oxid-sulfat-pentahydrat in Methanol oder Wasser als Lösungsmittel umsetzt. Die neuen Vanadium-dithiocarbamate können als Additive für Getriebedaueröle oder Hydrauliköle eingesetzt werden.

## Beschreibung

Nach den bekannten technischen Verfahren erfolgt die Herstellung der Schwermetalldithiocarbamate entweder durch doppelte Umsetzung von Alkali- oder Ammoniumdithiocarbamaten mit Schwermetallhalogeniden oder durch Umsetzung von Metalloxiden mit Aminen und Schwefelkohlenstoff.
Dithiocarbamate des Vanadium sind bisher nicht beschrieben worden.

Gegenstand der Erfindung sind Vanadium(IV)-oxid-bis(dialkyldithiocarbamate) der allgemeinen Formel I 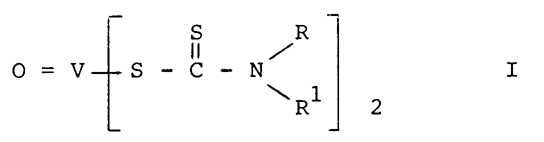
in der R gleiche oder verschiedene, verzweigte oder unverzweigte, gesättigte oder ungesättigte Alkylreste mit 1 - 18 Kohlenstoffatomen oder Cycloalkylreste mit 4 - 7 Kohlenstoffatomen bedeutet und R¹ die gleiche Bedeutung wie R hat, wobei aber R¹ nicht gleich R sein darf, wenn R C₁-C₄-Alkyl, Cyclobutyl oder Cyclohexyl ist.

Gegenstand der Erfindung ist ferner ein Verfahren zur Herstellung der erfindungsgemäßen Verbindungen der allgemeinen Formel I.

Nach den bekannten technischen Methoden ist es nicht möglich, die erfindunggemäßen Verbindungen herzustellen.

Es wurde nun gefunden, daß durch Umsetzung von Alkalidialkyl-dithiocarbamaten mit Vanadium(IV)-oxid-sulfatpentahydrat definierte Verbindungen der allgemeinen Formel I entstehen. Da die erfindungsgemäßen Verbindungen hervorragende Eigenschaften als Öladditive besitzen, stellt deren Herstellung eine wesentliche Verbesserung des Standes der Technik dar.

Die Herstellung erfolgt nach folgendem Reaktionsschema: 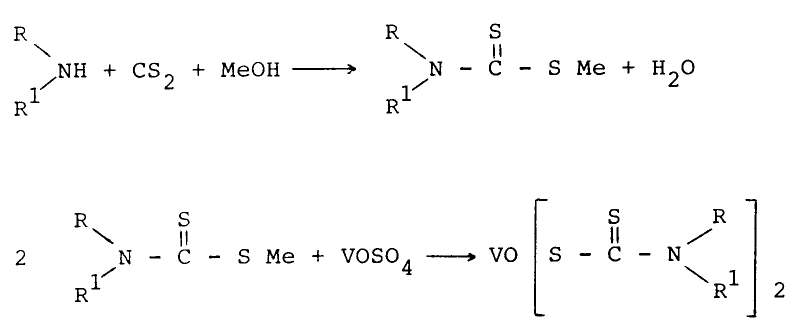
- R und R¹ :: obige Bedeutung
- Me :: Na, K, NH₄
Die Herstellung der Alkalidialkyldithiocarbamate ist im Prinzip bekannt. Zu ihrer Herstellung wird im allgemeinen folgendermaßen verfahren:
Eine 50%ige Natronlauge wird mit einem mit Wasser mischbarem Lösungsmittel, z.B. Methanol auf eine NaOH-Konzentration von etwa 5-10 Gew.% verdünnt. Dazu gibt man das sekundäre Amin und tropft Schwefelkohlenstoff zu. Alle Reaktionskomponenten werden in stöchiometrischen Mengen eingesetzt, wobei Schwefelkohlenstoff vorzugsweise mit einem 10%igen Überschuß gehandhabt wird. Die Mischung wird 1 - 3 Stunden bei Temperaturen von 10 - 50°C, vorzugsweise bei 25°C, gerührt.

Das so hergestellte Natrium-dialkyldithiocarbamat kann in Lösung sofort weiterverarbeitet werden und dient als Ausgangsprodukt für die Umsetzung mit Vanadium(IV)-oxid-sulfat oder einem anderen wasserlöslichen Vanadium(IV)-oxid-salz, früher auch Vanadylsalz genannt.

Stöchiometrische Mengen des Vanadium(IV)-oxid-sulfatpentahydrats werden im Wasser gelöst und mit dem Natriumdialkyldithiocarbamat zur Umsetzung gebracht. Die Reaktion erfolgt bei Temperaturen von 10 - 90°C, vorzugsweise bei etwa 30°C.

An Stelle des Methanols können auch andere mit Wasser mischbare Lösungsmittel wie Ethylenglykolmonoalkylether, Tetrahydrofuran, Dioxan, Ethanol, Isopropanol oder Butanol eingesetzt werden.
Die Reaktion läuft in beiden Stufen schwach exotherm ab, so daß eine zusätzliche Energiezuführung nicht erforderlich ist.
Nach einer Umsetzungsdauer von 2 Stunden wird vom ausgefallenen Alkalisufat abfiltriert und das Gemisch aus Lösungsmittel und Wasser im Vakuum bei einer Temperatur von 50°C abdestilliert. Das so erhaltene schwarzbraune Öl wird gegebenenfalls nochmals von Natriumsulfatresten durch Filtration getrennt.

Die neuen Vanadium(IV)-oxid-bis(dialkyldithiocarbamate) der allgemeinen Formel I eignen sich als Additive für Hydrauliköle oder Getriebedaueröle.

Die folgenden Beispiele zur Herstellung der erfindungsgemäßen Verbindungen sollen die Erfindung beschreiben, jedoch nicht einschränken.

### Beispiel 1:

### Vanadium(IV)-oxid-bis(di-2-ethylhexyl-dithiocarbamat)

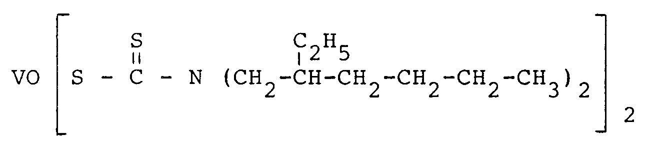

- Summenformel:: C₃₄H₆₈N₂OS₄V
- Molekulargewicht:: 700,103

64 g einer 50%igen Natronlauge werden zu 400 ml Methanol gegeben. Dazu gibt man 192,8 g Di-2-ethylhexylamin. Unter mechanischem Rühren am Intensivkühler tropft man im Verlauf von 20 Minuten 50 ml Schwefelkohlenstoff zu.

Die Mischung wird noch 3 Stunden weiter gerührt. Dann wird im Verlauf von 1 Stunde die Lösung von 100 g Vanadium(IV)-oxid-sulfat-pentahydrat in 250 ml Methanol zugetropft. Über Nacht wird stehengelassen. Danach wird im Vakuum das Lösungsmittel abgedampft und der Rückstand in Aceton aufgenommen. Vom ausgefallenen Natriumsulfat wird abfiltriert und das Aceton abdestilliert.

Es wurde ein zähflüssiges braunschwarzes Öl erhalten.
- Ausbeute:: 85 % der Theorie, 235,5 g
- Gehalt:: über Stickstoffbestimmung ― 94,97 %

### Beispiel 2:

### Vanadium(IV)-oxid-bis-(di-2-ethylhexyl-dithiocarbamat)

32 g festes Natriumhydroxid werden in 400 ml Methanol gelöst. Dazu gibt man 192,8 g Di-2-ethylhexylamin. Unter Rühren am Intensivkühler tropft man im Verlauf von 20 Minuten 50 ml Schwefelkohlenstoff zu. Die Mischung wird noch 3 Stunden weiter gerührt. Dann wird im Verlauf von einer Stunde die Lösung von 100 g Vanadium(IV)-oxid-sulfat-pentahydrat in 250 ml Methanol zugetropft. Es wird über Nacht stehen gelassen und vom ausgefallenen Natriumsulfat abfiltriert.
Im Vakuum wird anschließend Methanol abdestilliert und das Produkt getrocknet.
- Ausbeute:: 87 % der Theorie
- Gehalt:: über Stickstoffbestimmung ― 97 %

### Beispiel 3:

### Vanadium(IV)-oxid-bis(diamyl-dithiocarbamat)

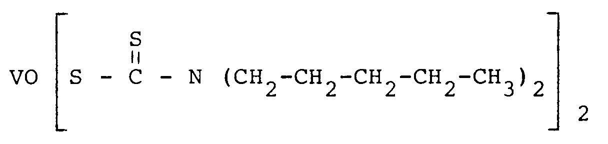

- Summenformel:: C₂₂H₄₄N₂OS₄V
- Molekulargewicht:: 531,78

29,6 g einer 50%igen Natronlauge werden zu 200 ml Methanol gegeben. Dazu gibt man 58,1 g Diamylamin. Unter Rühren gibt man 24 ml Schwefelkohlenstoff dazu und rührt 2 Stunden nach.

Zum Reaktionsgemisch werden dann 47 g Vanadium(IV)-oxid-sulfat-pentahydrat in 150 ml Methanol gegeben. Es wird 3 Stunden nachgerührt und über Nacht stehengelassen.

Vom Lösungsmittel wird abdestilliert und der Rückstand mit 200 ml Aceton aufgenommen. Vom Natriumsulfat wird abfiltriert und das Aceton im Vakuum abdestilliert. Es wurde ein dunkelbraunes Öl erhalten.
- Ausbeute:: 23,2 g
- Gehalt:: über Stickstoffbestimmung ― 100 %

### Beispiel 4:

Vanadium(IV)-oxid-bis(ditridecyldithiocarbamat) 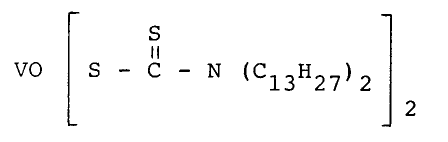
- Summenformel:: C₅₄H₁₀₄N₂OS₄V
- Molekulargewicht:: 976,608
80 g einer 50%igen Natronlauge werden zu 500 ml Methanol gegeben. Dazu gibt man 381,7 g Ditridecylamin.
Unter mechanischem Rühren am Intensivkühler tropft man im Verlauf von 20 Minuten 66,5 ml Schwefelkohlenstoff zu. Die Mischung wird noch 3 Stunden weiter gerührt. Dann wird im Verlauf von einer Stunde die Lösung von 127 g Vanadium(IV)-oxid-sulfat-pentahydrat in 300 ml Methanol zugetropft. Über Nacht wird stehengelassen.

Danach wird im Vakuum das Lösungsmittel abgedampft und der Rückstand in Aceton aufgenommen.
Vom ausgefallenen Natriumsulfat wird abfiltriert und das Aceton abdestilliert. Es wurde ein pastöses braunschwarzes Produkt erhalten
- Ausbeute:: 80 % der Theorie
- Gehalt:: über Stickstoffbestimmung ― 97,5 %

## Patentansprüche

1. Vanadium(IV)-oxid-bis(dialkyldithiocarbamate) der allgemeinen Formel I 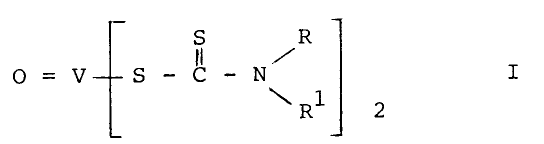 in der R gleiche oder verschiedene, verzweigte oder unverzweigte, gesättigte oder ungesättigte Alkylreste mit 1 - 18 Kohlenstoffatomen oder Cycloalkylreste mit 4 - 7 Kohlenstoffatomen bedeutet und R¹ die gleiche Bedeutung wie R hat, wobei aber R¹ nicht gleich R sein darf, wenn R C₁-C₄-Alkyl, Cyclobutyl oder Cyclohexyl ist.

2. Verbindung nach Anspruch 1, dadurch gekennzeichnet, daß R und R¹ gleiche oder verschiedene Alkylreste mit 5 - 18 Kohlenstoffatomen bedeuten.

3. Vanadium-IV-oxid-bis(di-2-ethylhexyl-dithiocarbamat)

4. Vanadium-IV-oxid-bis(di-amyl-dithiocarbamat)

5. Vanadium-IV-oxid-bis(di-tridecyl-dithiocarbamat)

6. Verfahren zur Herstellung von Vanadium-IV-oxid-bis (dialkyldithiocarbamaten) der allgemeinen Formel I, dadurch gekennzeichnet, daß man 2 Mol eines Alkalidialkyl-dithiocarbamats der allgemeinen Formel II 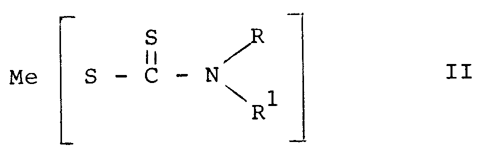 in der R und R¹ die Bedeutung von Anspruch 1 haben und Me für Natrium, Kalium oder Ammonium steht, mit 1 Mol Vanadium(IV)-oxid-Sulfat umsetzt, das gebildete Natrium- oder Ammoniumsulfat abtrennt und das Vanadium(IV)-oxid-bis(dialkyldithiocarbamat) isoliert.

7. Verfahren nach Anspruch 6, dadurch gekennzeichnet, daß als Lösungsmittel mit Wasser mischbare Lösungsmittel wie Ethylglykolmonoalkylether, Tetrahydrofuran, Dioxan, Ethanol, Methanol, Isopropanol oder Butanol eingesetzt werden.

8. Verfahren nach Anspruch 6 oder 7, dadurch gekennzeichnet, daß als Lösungsmittel Wasser eingesetzt wird.

9. Verfahren nach einem der Ansprüche 6 bis 8, dadurch gekennzeichnet, daß die Umsetzung bei Temperaturen von 10 - 90°C, vorzugsweise bei 20 - 30°C, erfolgt.

10. Verwendung der Vanadium(IV)-oxid-bis(dialdylthiocarbamate) nach Anspruch 1 bis 5 als Additive für Hydrauliköle oder Getriebedaueröle.
